# EUROPÄISCHE PATENTSCHRIFT

(11) **EP 2 848 343 B1**
(45) Veröffentlichungstag und Bekanntmachung des Hinweises auf die Patenterteilung: **03.08.2022**
(21) Anmeldenummer: 14183089.3
(22) Anmeldetag: 01.09.2014
(51) Int. Cl.: B23C 5/10, B23C 5/00

(54) **Fräser mit Kordel aus einem speziellen Zahnprofil**
Milling cutter with an edge cord having a specific tooth profile
Fraise avec cordon ayant un profilé de dent spécial

(30) Priorität: 16.09.2013 DE 102013015261
(43) Veröffentlichungstag der Anmeldung: 18.03.2015
(73) Patentinhaber: Franz Haimer Maschinenbau KG, 86568 Hollenbach-Igenhausen (DE)
(72) Erfinder: Haimer, Franz-Josef, 86568 Igenhausen (DE); Sanhieter, Reinhold, 86558 Hohenwart (DE)
(74) Vertreter: Schwarz, Wolfgang

(56) Entgegenhaltungen:
- EP-A1- 0 062 693
- JP-A- S60 118 412
- US-A- 4 721 421
- US-A1- 2010 226 726
- US-A1- 2014 161 546

## Beschreibung

Die Erfindung betrifft einen Fräser mit mindestens einer Umfangsschneide und vorzugsweise einen wendelgezahnten bzw. spiraligen Schaftfräser. Letztgenannte Fräser schneiden sowohl an ihrem Umfang als auch an ihrer Stirn.

Soweit solche Fräser als Schruppfräser zum Einsatz kommen, ist ihre Umfangsschneide häufig mit einem unterbrochenen Zahnprofil versehen, der sog. "Kordel". Zusätzlich ist häufig eine speziell ausgebildete Spanleitstufe auf der Spanfläche vorhanden, die im Rahmen dieser Erfindung allerdings nur von untergeordneter Bedeutung ist.

Die Kordel hat den Zweck, die Schneidkantenlänge, die Spanbildung und die Schnittkraft so zu beeinflussen, dass sie für das Schruppen günstig sind, indem der Span eine optimale Breite erhält, wodurch er schnell bricht und daraufhin trotz des hohen Zeitspanvolumens problemlos abgeführt werden kann. Sehr schmale Späne brechen beispielsweise relativ schlecht und neigen dazu, lange Fäden zu bilden. Breite Späne, wie sie bei Werkzeugen mit durchgehender Schneide entstehen, brechen wegen ihrer hohen Festigkeit ebenfalls schlecht und benötigen sehr hohe Schnittkräfte. Die Tatsache, dass Werkzeuge mit unterteilten Schneiden schlechtere Oberflächengüten erreichen, wird bisher bewusst in Kauf genommen.

Solche Schruppfräser mit Kordel eignen sich also insbesondere gut für den Einsatz als sog. HPC (High Performance Cutting), bei dem besonders große Zeitspanvolumina realisiert werden.

Schruppfräser mit Kordel sind seit geraumer Zeit im Einsatz und haben bisher eine sehr gute Alltagstauglichkeit gezeigt, die keinen besonderen Anlass zu Beanstandungen gab.

Aus der US 2010/226726 A1 ist ein Fräser bekannt mit mindestens einer an seinem Umfang angeordneten Umfangschneide, wobei die Umfangsschneide als Profil aus voneinander beabstandeten, durch Nuten (332) getrennten Zähnen ausgestaltet ist, das eine sog. "Kordel" bildet, wobei jeder der Zähne - wenn man von der Spannut her entgegen der Schnittrichtung auf die Schneidkante blickt - eine Schneidkante ausbildet, die aus mehreren unterschiedlichen Radien (RF1, RF2, RK) zusammengesetzt ist, nämlich aus mindestens einem größeren Radius (RK), der den überwiegenden Teil (LB) der Schneidkante des betreffenden Zahns (7) bildet und einem sich vorzugsweise zu beiden Seiten unmittelbar daran anschließenden, kleineren Radius (RF1, RF2).

Erhöht man die Zeitspanvolumina signifikant, indem man die Leistungsgrenze des Zerspanwerkzeugs voll ausnutzt, dann zeigt sich bei den bekannten Schruppfräsern mit Kordel plötzlich, dass die Umfangsschneiden dort, wo sie mit dem die Kordel bildenden Zahnprofil versehen sind, ausplatzen können. Hierdurch wird die Lebensdauer des Werkzeugs verkürzt. Insbesondere tritt dies Problem bei Vollhartmetallwerkzeugen auf, deren Schneiden auch unter der hohen Belastung der Hochleistungszerspanung so lange Lebensdauern erreichen, dass es z. T. in signifikantem Umfang zum Versagen des die Kordel bildenden Zahnprofils durch Ausplatzungen kommt, obwohl die Schneiden als solche an sich noch hinreichend scharf wären.

Es ist daher die Aufgabe der Erfindung, einen Fräser mit einem eine Kordel bildenden Profil zu schaffen, das standfester ist.

Diese Aufgabe wird durch einen Fräser mit den Merkmalen des Anspruchs 1 gelöst.

Der erfindungsgemäße Fräser besitzt mindestens eine und vorzugsweise mehrere an seinem Umfang angeordnete Umfangschneiden. Dabei ist im Regelfall jede Umfangsschneide als Profil aus quer zur Schnittrichtung voneinander beabstandeten Zähnen ausgestaltet, das eine sog. "Kordel" bildet. Erfindungsgemäß bildet jeder der Zähne - wenn man von der Spannut her in Umfangsrichtung auf die Schneidkante blickt - eine Schneidkante aus, die aus mehreren unterschiedlichen Radien zusammengesetzt ist, nämlich aus mindestens einem größeren Radius R1, der den überwiegenden Teil der Schneidkante an dem betreffenden Zahn bildet und einem sich vorzugsweise zu beiden Seiten unmittelbar daran anschließenden kleineren RadiusR2.

Dabei ist jeder der genannten Radien Teil der Schneidkante, also an der Spanabnahme beteiligt. Derjenige Bereich der Nut zwischen zwei Zähnen, der nicht an der Spanabnahme beteiligt ist, bildet - selbst wenn er in irgendeiner Weise verrundet ist - keinen Radius, der im Sinne der Erfindung relevant wäre.

Eine solche Gestaltung ist auf den ersten Blick scheinbar nachteilhaft, denn sie erfordert eine höhere Schnittkraft.

Indes zeigt sich bei näherer Untersuchung, dass durch die Zusammensetzung der Schneidkante aus mehreren, sich deutlich unterscheidenden Radien trotz der höheren Schneidkräfte eine entscheidend bessere Wärmeverteilung erreicht wird, was zu einer Steigerung der Kantenstabilität in einem unerwarteten Maß führt.

Das mag damit in Zusammenhang stehen, dass sich die absolute Größe des großen Radius eines Zahns relativiert. Dieser Radius hat eine nicht unbeträchtliche Größe, wenn man senkrecht zum Drallwinkel auf die Schneidkante blickt. Wenn man jedoch in Umfangsrichtung, entgegen der Schnittrichtung, auf die Schneidkante blickt, erscheint die Zahnbreite durch den Drallwinkel perspektivisch verkürzt. Der große Radius wirkt sich auf Grund dessen weniger nachteilhaft aus, als es zunächst den Eindruck erweckt, so dass seine positiven Effekte überwiegen. Deshalb ist die Schnittkraft tatsächlich geringer, als der große Radius vermuten ließe.

Im Rahmen eines bevorzugten Ausführungsbeispiels ist vorgesehen, dass für die Größe des größeren Radius und des kleineren Radius relativ zueinander gilt: R1/R2 ≥ 10 und vorzugsweise R1/R2 ≥ 15. Auf diese Art und Weise bildet der größere Radius eine ausgeprägte Plateaufläche aus, die eine sehr gute Spanabnahme zeigt. Dabei macht der sich vorzugsweise auf beiden Seiten der Plateaufläche anschließende kleine Radius die Übergänge hin zu der die beiden benachbarten Zähnen trennenden Nut ausgesprochen unempfindlich, so dass gerade das in diesem Bereich zu befürchtende Ausbrechen gegenüber dem, was aus dem Stand der Technik bekannt ist, wesentlich eingedämmt wird. Vorzugsweise schließt sich an die kleineren Radien auf deren vom Plateau abgewandter Seite jeweils eine Steilflanke an, die unter einem Winkel β zur gedachten Mittellinie des betreffenden Zahns verläuft, der ≤ 30° und idealerweise sogar ≤ 18° ausgebildet ist. Überraschend und aus derzeit noch nicht näher untersuchten Gründen zeigt sich bei praktischen Versuchen, dass eine derartige Steilflanke - verglichen mit den bisher bekannten, deutlich flacheren Zahnflanken - wesentlich zur Dauerstandfestigkeit beiträgt.

Vorzugsweise ist der Fräser so gestaltet, dass die Steilflanke in einen konkaven und idealerweise mit einem im Wesentlichen konstanten Radius ausgestatteten Grund einer Nut übergeht.

Noch nicht geklärt ist der Grund für die überraschende Feststellung, dass Fräser eine wesentlich bessere Standzeit zeigt, wenn zwei entlang einer Hauptschneidkante benachbarte Zähne nur durch schmalere Nuten voneinander getrennt sind, als sie bisher im Stand der Technik verwendet wurden - nämlich Nuten, für deren Breiten ZB (Zahnbreite) und NB (Nutbreite) gilt NB/ZB ≤ 0,5 oder sogar ≤ 0,3. Vorzugsweise gilt diese Beziehung für alle Nuten der Kordel, wobei evtl. vereinzelten Nuten, etwa am Anfang oder Ende einer Umfangsschneide oder im Rahmen patentrechtlicher Umgehungsversuche, ausgenommen sein können.

Vorzugsweise ist der erfindungsgemäße Fräser so gestaltet, dass jeweils zwei entlang einer Hauptschneidkante benachbarte Zähne durch Nuten voneinander getrennt sind, für die gilt, dass der Betrag der maximalen Nuttiefe im Wesentlichen kleiner oder gleich dem Betrag der maximalen Nutbreite entspricht.

Die Erfindung lässt sich besonders nutzbringend für Vollhartmetallfräser verwenden.

Weitere Wirkungsweisen, Vorteile und Ausgestaltungsmöglichkeiten macht die nachfolgende Beschreibung eines Ausführungsbeispiels und seiner Unterschiede gegenüber dem bislang bekannten Stand der Technik sichtbar.
Die Fig. 1 zeigt einen Schaftfräser gemäß der Erfindung, wobei die genaue Verzahnungsgeometrie in dieser Zeichnung nicht zu erkennen ist, wohl aber die prinzipielle Anordnung der einzelnen Zähne, die hier eine Kordel bilden.
Fig. 2 zeigt ein aus dem Stand der Technik bekanntes Zahnprofil von der Spannut 10 entgegen der Schnittrichtung blickend gesehen.
Fig. 3 zeigt ein aus dem Stand der Technik bekanntes, verbessertes Zahnprofil von der Spannut 10 entgegen der Schnittrichtung blickend gesehen.
Fig. 4 zeigt ein Ausführungsbeispiel des erfindungsgemäßen Zahnprofils von der Spannut 10 entgegen der Schnittrichtung blickend gesehen.
Fig. 5 zeigt eine vergrößerte Darstellung eines der Zähne aus Fig. 4.
Fig. 6 zeigt einen Blick auf eine Umfangschneide, von der der Umfangsschneidkante abgewandten Seite her gesehen.
Fig. 7 zeigt nochmals ein detailgetreues Gesamtbild des Fräsers, der hier als Ausführungsbeispiel dient.
Fig. 8 zeigt nochmals ein detailgetreues Gesamtbild der Schneiden und insbesondere der Umfangsschneiden des Fräsers der hier als Ausführungsbeispiel dient

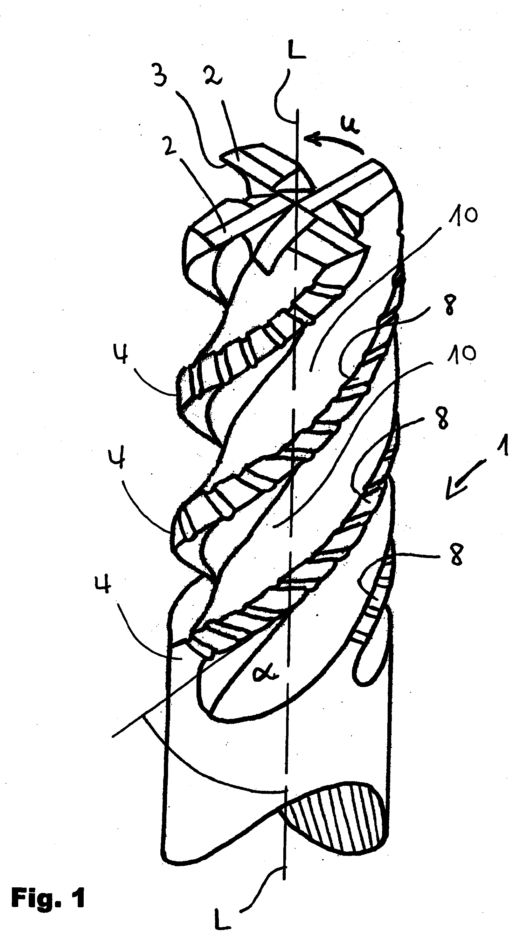

Die Fig. 1 zeigt einen erfindungsgemäßen Fräser 1 in Gestalt eines Schaftfräsers mit Kordel, wobei der Fig. 1 wegen ihres kleinen Maßstabs allerdings nicht die entscheidenden Unterschiede entnommen werden können, durch die sich das Profil der erfindungsgemäßen Kordel vom Stand der Technik unterscheidet.

Der Schaftfräser ist rechtsschneidend, was durch den Pfeil U visualisiert wird. Die Erfindung ist aber auch für linksschneidende Fräser anwendbar. Der Schaftfräser besteht vorzugsweise aus Vollhartmetall von den Schneiden bis einschließlich des Schafts.

Gut zu erkennen sind hier die Stirnschneiden 2 mit ihren Stirnschneidkanten 3. Der hier gezeigte Fräser ist als sog. "Langloch-" oder "Schaftfräser" ausgeführt, was man daran sieht, dass seine Stirnschneiden jeweils kurz vor der Rotationsachse L des Fräsers enden. Auf Grund dessen wird der Werkstoff beim Eintauchen im Bereich der Längsachse lediglich verdrängt, was einen verringerten Vorschub erzwingt. Die Erfindung ist jedoch nicht hierauf beschränkt, sondern erfasst vorzugsweise auch sog. "Bohrnutenfräser", deren Stirnschneiden eine über die Rotationsachse L hinweg verlaufende Verlängerung aufweisen.

Gut zu erkennen sind auch die Umfangsschneiden 4 mit ihren Umfangsschneidkanten 5 und den ihnen zugeordneten Hauptfreiflächen 8. Zwischen den in Arbeitsdrehrichtung U aufeinander folgenden Umfangsschneidkanten sind Spannuten 10 vorgesehen, die, genau wie die Umfangsschneiden 4, schraubenförmig gewunden verlaufen. Der Drallwinkel α der Umfangsschneiden 4 ist vorzugsweise so gewählt, dass eine Umfangsschneide erst dann mit dem Werkstück außer Eingriff kommt, wenn die nächste Schneide bereits im Schnitt ist. Die Erfindung ist aber auch für Schneiden ohne Drall und für Schneiden, deren Drall der Arbeitsdrehrichtung U entgegengesetzt ist, anwendbar.

Die in Fig. 1 insgesamt zu erkennende Kordel wird dadurch gebildet, dass jede Umfangsschneide im Bereich ihrer Schneidkante mit einem Zahnprofil versehen ist, wie es gleich noch näher beschrieben wird. Dabei sind die einzelnen Zähne 7 von in Umfangsrichtung unmittelbar hintereinander angeordneten Umfangsschneiden 4 vorzugsweise so angeordnet, dass in Umfangsrichtung gesehen nicht zwei Zähne 7 direkt hintereinander angeordnet sind, stattdessen sind die Zähne 7 aufeinander folgender Umfangsschneiden 2 mit Versatz in Richtung der Rotationsachse L zueinander angeordnet.

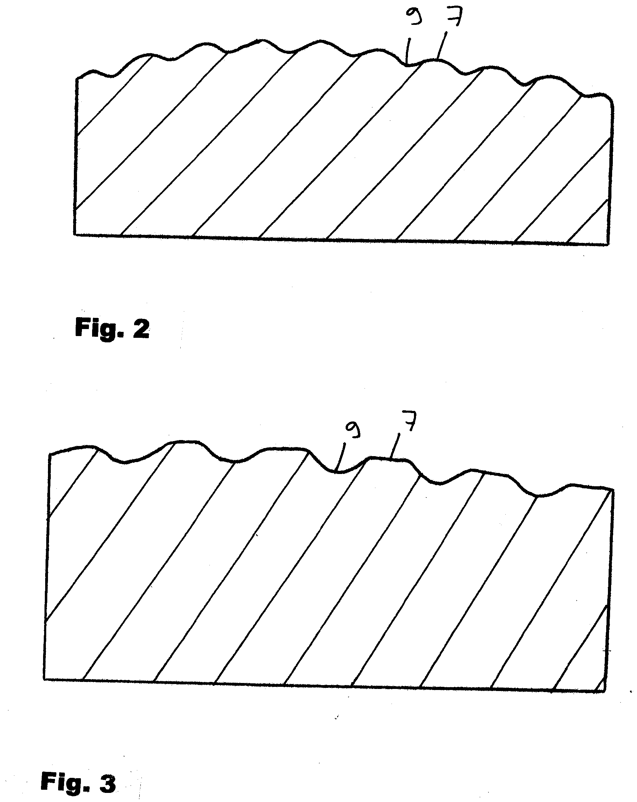

Die Fig. 2 zeigt ein typisches Zahnprofil einer im Stand der Technik bekannten Kordel bei vergrößerter Betrachtung in einem Messprojektor.

Um die Erfindung zu verstehen muss man zunächst wissen, dass jeder Zahn 7 im Wesentlichen nur im Bereich seiner Kuppe einen Span abhebt, während die Täler zwischen zwei benachbarten Zähnen im Regelfall (wenn mit sachgerechtem Vorschub gearbeitet wird) selbst nicht aktiv am eigentlichen Abheben des Spans beteiligt sind. Dies wird verständlich, wenn man sich vor Augen führt, dass die Eingriffstiefe eines jeden Zahns (der sog. Zahnvorschub) im Zehntelmillimeter-Bereich liegt, meist bei ca. 0,1 mm bis 0,2 mm.

Wie man sieht weist hier jeder einzelne Zahn 7 der Kordel ein Profil auf, das an seiner Außenkante stetig konvex ist und erst im Grund der Täler, die der betreffende Zahn zusammen mit den links und rechts benachbarten Zähnen ausbildet, in einen gegenläufig gekrümmten, konkaven Verlauf übergeht.

Eine Kordel, die durch derartige Zahnprofile gebildet wird, wie sie die Fig. 2 zeigt, bildet vergleichsweise kleine Kontaktzonen aus. Die kleinen Kontaktzonen haben jedoch Stabilitätsprobleme. Die die Kordel bildenden Zähne neigen zum schnellen Ausplatzen durch starke thermische Belastung. Die durch eine derart profilierte Kordel gebildeten Späne neigen, obwohl sie merklich schmaler sind, als die Späne einer Schneide ohne Kordel, nach wie vor zu einer gewissen Knäuel-Bildung, was eine relativ schlechte Spanabfuhr zur Folge hat. Zugleich wird die Oberflächenqualität der Oberfläche des spanabhebend bearbeiteten Bauteils nicht optimal.

Die Fig. 3 zeigt ein weiteres Zahnprofil einer im Stand der Technik bekannten Kordel bei vergrößerter Betrachtung in einem Messprojektor.

Wie man sieht, weist hier jeder einzelne Zahn der Kordel ein Profil auf, das an seiner Außenkante einen signifikanten geradlinigen Abschnitt aufweist, der an seinen beiden Seiten über einen konvexen Radius in den konkaven Grund des jeweils recht weitläufigen Tals übergeht, das der betrachtete Zahn mit dem benachbarten Zahn ausbildet.

Hierdurch wird ein guter Spanbruch erreicht und eine gute Oberflächenqualität, weshalb dieses Kordelprofil unter Fachleuten bisher als optimale Lösung angesehen wird, und eine dementsprechend weite Verbreitung in der Praxis gefunden hat.

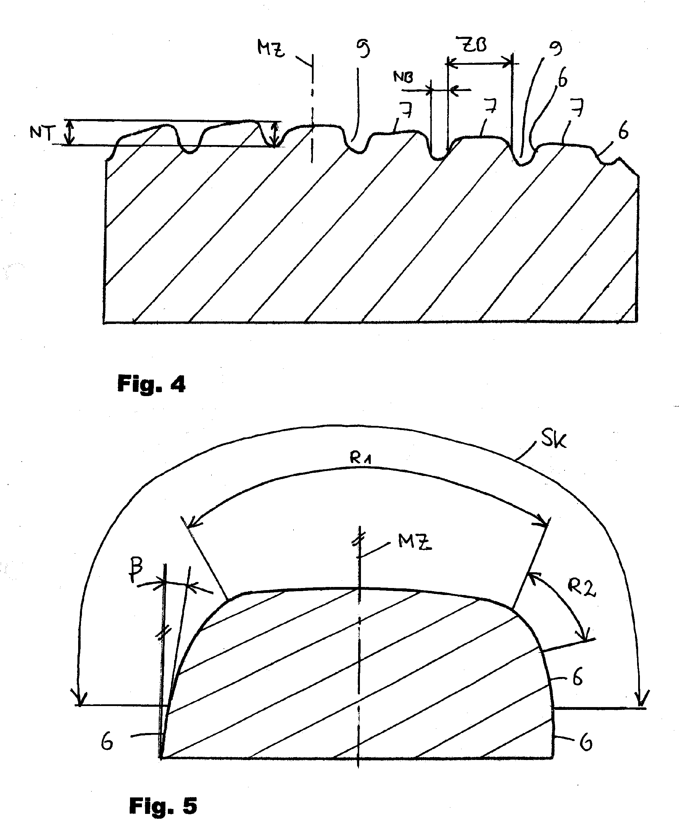

Die Fig. 4 zeigt ein Ausführungsbeispiel des erfindungsgemäßen Zahnprofils, ebenfalls bei Betrachtung unter der Vergrößerung eines Messprojektors. Auch die Fig. 4 zeigt, wie schon die Fig. 2 und 3, einen Blick auf eine Umfangsschneidkante von ihrer Spannut 10 her gesehen.

Das Zahnprofil der erfindungsgemäßen Kordel zeichnet sich gegenüber dem bekannten primär dadurch aus, dass die aktiv an der Spanabnahme beteiligte Schneidkante SK eines Zahns im Neuzustand und in Richtung quer bzw. orthogonal zur Schnittrichtung aus mehreren Radien zusammengesetzt ist. Der überwiegende Teil der Schneidkante wird dabei aus einem größeren Radius R1 gebildet, der so groß ist, dass er ein in Richtung der Rotationsachse L des Fräsers nur schwach gekrümmtes Plateau ausbildet, das mindestens 2/3 und besser noch 3/4 der Zahnbreite ZB einnimmt. An dieses Plateau schließt sich vorzugsweise zu beiden Seiten jeweils ein kleinerer Radius R2 an. Dabei bilden die besagten Radien R1 und R2, von der Außenseite des Fräserumfangs her gesehen, nach außen gekrümmte Flächen aus.

Unter den Begriff "Radius" fallen dabei allerdings nur willkürlich hergestellte Radien und nicht jene beliebig kleinen "Radien", die bei nahezu beliebiger Vergrößerung an fast jeder Kante anzutreffen sind, an der zwei Oberflächen sprunghaft ineinander übergehen, insbesondere dann, wenn die Kante schon verschlissen ist. Vorzugsweise werden nur solche willkürlichen "Radien" als Radius im Sinne der Erfindung angesehen, die einen Krümmungsradius RK ≥ 0,1 mm aufweisen.

Das erfindungsgemäße Zahnprofil zeichnet sich darüber hinaus aber auch zusätzlich noch dadurch aus, dass es im Hinblick auf eine ganze Reihe von weiteren Parametern optimiert ist, die bisher unter Fachleuten nur wenig Beachtung gefunden haben.

Sieht man sich einen einzelnen Zahn gem. Fig. 4 nochmals vergrößert an, dann bietet sich das von Fig. 5 wiedergegebene Bild. Das Plateau jedes Zahns besitzt kein ebenes Profil, sondern ist stattdessen konvex ausgestaltet und besitzt vorzugsweise einen ersten Krümmungsradius R1. An den Rändern des Zahns, wo dieser beginnt in eine ein Tal zwischen ihm und dem unmittelbar benachbarten Zahn bildende Nut überzugehen, geht der Krümmungsradius R1 in jeweils einen kleineren Krümmungsradius R2 über. Vorzugsweise gilt R1/R2 ≥ 10 und besser noch ≥ 15. An die Krümmungsradien R2 schließt sich vorzugsweise eine Fläche an, die als Steilflanke 6 des betreffenden Zahns bezeichnet werden kann und die vorzugsweise im Wesentlichen geradlinig ist. Ein Teil der Steilflanke - vorzugsweise etwa 1/3 bis max. 1/2 - gehört mit zur Schneidkante und ist daher an der Spanabnahme beteiligt, was erklärt, dass auch das Vorhandensein der Steilflanke zu einem positiven Effekt beiträgt. Diese Steilflanke 6 geht zwischen zwei benachbarten Zähnen in einen konkaven Profilverlauf über, der den Nutgrund zwischen den beiden Zähnen bildet.

Wie man sieht unterscheidet sich das erfindungsgemäße Zahnprofil vorzugsweise auch durch diese Steilflanke von den bisher bekannten Zahnprofilen, wobei für den Winkel β, unter dem die Steilflanke relativ zu der Mittellinie MZ eines Zahns verläuft, vorzugsweise folgendes gilt: β ≤ 30° und idealerweise β ≤ 18°.

Darüber hinaus fällt bei einem Vergleich der Fig. 2 und 3 sowie 4 auf, dass bei den Zahnprofilen aus dem Stand der Technik die Nuten zwischen benachbarten Zähnen deutlich größer sind als bei dem erfindungsgemäßen Zahnprofil. Für das erfindungsgemäße Zahnprofil gilt im Hinblick auf die Zahnbreite ZB und die Nutbreite NB vorzugsweise folgende Beziehung: NB/ZB ≤ 0,5 und bevorzugt NB/ZB ≤ 0,3.

Schließlich muss beachtet werden, dass auch die Tiefe der Nuten, die die einzelnen Zähne trennen, einen deutlich größeren Einfluss auf die Spanbildung haben als bisher angenommen. Das erfindungsgemäße Zahnprofil ist vorzugsweise so ausgestaltet, dass seine Nuttiefe NT im Wesentlichen kleiner oder gleich seiner Nutbreite NB ist und/oder dass gilt ZB/NT ≤ 3,5 oder bevorzugt ZB/NT ≤ 5.

Insgesamt gesehen ergeben sich bei Befolgung der Gesamtkombination der Optimierungsmaßnahmen tiefe, schmale und steil abfallende Nuten, die einen überraschend positiven Einfluss auf die Haltbarkeit und die Spanbildung haben.

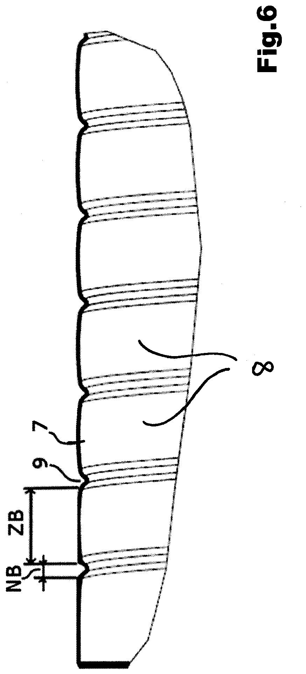

Schon die Fig. 1 zeigt eine weitere sehr günstige und daher bevorzugte Ausgestaltungsmöglichkeit der Erfindung, insoweit noch deutlicher wird die Fig. 6:
Das Kordelprofil beginnt erst mit Abstand zu den Stirnschneiden. Dieser Abstand entsteht dadurch, dass die erste Nut 9, die den Beginn eines Zahns markiert 7, vorzugsweise mindestens eine Zahnbreite ZB von der Stirnschneide 2 entfernt ist, in die die Nebenschneide mündet, zu der diese Nut gehört. Dies hat den Zweck, die bisher für unkritisch gehaltenen, unvollständigen Zähne im Übergangsbereich zwischen Stirn- und Umfangsschneide zu vermeiden, da sich diese als unerwartet stark bruchanfällig erwiesen haben, sobald das Profil der Kordel erfindungsgemäß ausgeführt wird. Die Unvollständigkeit dieser Zähne 7 kommt dabei dadurch zustande, dass sich die Umfangsschneide 4 im Übergangsbereich zu den Stirnschneiden 2 hin verjüngt und die Zähne 7 in diesem Bereiche in ihrer Länge und Breite begrenzt werden. Vorzugsweise beträgt der Abstand der ersten Nut 9, die den ersten Zahn 7 definiert dabei nicht mehr als drei, idealerweise nicht mehr als zwei Zahnbreiten ZB.

Besonders vorteilhaft wirkt sich die erfindungsgemäße Schneidengeometrie auf Vollhartmetallfräser aus, d. h. auf Hartmetallfräser, bei denen zumindest die Stirnschneidkanten und die Umfangsschneidkanten samt der Kordeln aus Hartmetall bestehen. Typischerweise besteht bei Hartmetallfräsern sogar der gesamte Fräser einschließlich seines Einspannschafts aus Hartmetall.

Um ungewollte Vibrationen zu vermeiden und um die Oberflächengüte zu verbessern, sind Stirnschneiden 2 in Umfangsrichtung gesehen ungleichmäßig geteilt, d.h. sie schließen zwischen einander mindestens 2 verschiedene Winkel ein. Diese Ungleichteilung setzt sich dann vorzugsweise zwischen den Umfangsschneiden fort und wird im Idealfall durch deren unterschiedliche Steigungswinkel bzw. Drallwinkel α1, α2 noch verstärkt, wobei es vorzugsweise so ist, dass es durch die unterschiedlichen Steigungswinkel in einer Ebene Fräsers zu einer Gleichteilung kommen kann, d. h. dass in dieser besagten Ebene die Umfangsschneiden 4 in Umfangsrichtung gesehen jeweils mit gleichen Abständen zueinander angeordnet sind. Die Ungleichteilung vermeidet, dass es durch die in schnellem Wechsel in das Werkstück eintauchenden und aus ihm austretenden Schneiden zu gleichmäßig getakteten Kraftstößen kommt, die auf Grund ihrer Gleichmäßigkeit verstärkt zur Schwingungsanregung neigen.

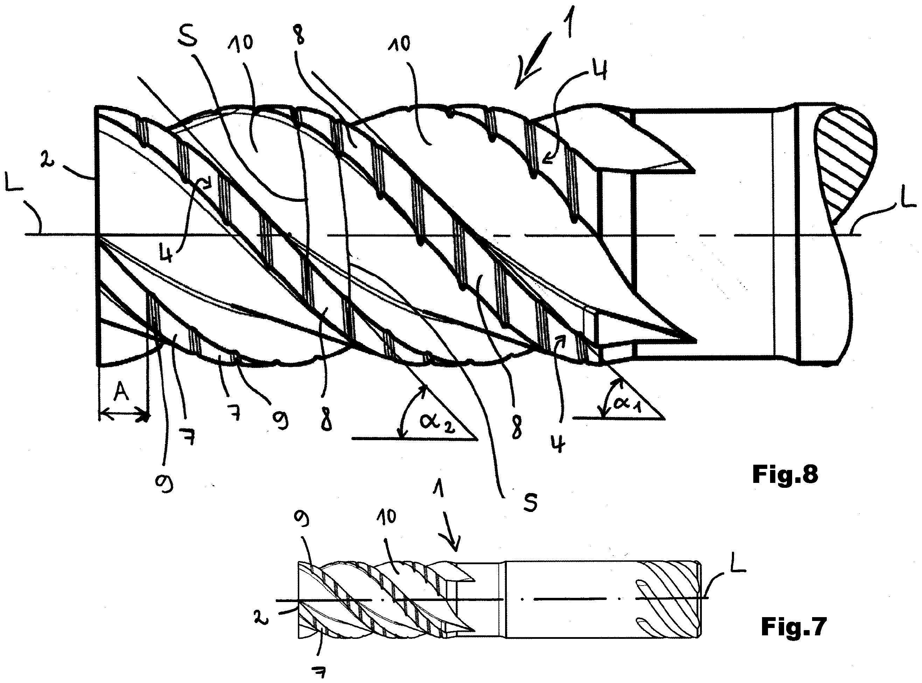

Weiterhin können die Nuten 9 auch auf den Umfangsschneiden 4 zueinander entlang der Rotationsache L versetzt sein, vorzugsweise um den Faktor 1/n, wobei n der Anzahl der konstant beabstandeten Umfangsschneiden 4 entspricht.Wo die Umfangsschneiden 4 nicht konstant beabstandet angeordnet sind, ist es vorzugsweise so, dass die Nuten 9 auf den Umfangsschneiden 4 derart versetzt zueinander angeordnet sind, dass sie insgesamt entlang einer gedachten Schraubenlinie S angeordnet sind, vgl. Fig. 8, in die zwei der gedachten Schraubenlinien S eingezeichnet sind. Die jeweilige Schraubenlinie hat in vielen Fällen eine durchgängig konstante Steigung, von ihrem Anfang bis zu ihrem Ende und gibt damit die Positionierung der Nuten vor. Für manche Anwendungen hat es sich hingegen als besonders vorteilhaft erwiesen, wenn die gedachte Schraubenlinie eine variable Steigung aufweist

In einer alternativen Ausführungsform kann jede zweite Umfangsschneide als Schlichtschneide, d. h. kordelfrei, ohne Unterteilung in Zähne und Nuten, ausgebildet sein, wodurch ein sogenannter Schrupp-Schlicht-Fräser entsteht.

Unter dem Begriff "Hartmetall" werden im Rahmen dieser Erfindung gesinterte Carbidhartmetalle verstanden, sowie die sog. "Cermets", bei denen es sich um Carbid-freie Sinterwerkstoffe handelt.

Erstaunlicherweise hat sich allerdings herausgestellt, dass man mit Hilfe der Erfindung auch Fräser aus den gängigen Schnellarbeits- und Werkzeugstählen wesentlich verbessern kann.

Der Vollständigkeit halber ist hervorzuheben, dass mit Hilfe der Erfindung selbstverständlich nicht nur Schaftfräser entscheidend verbessert werden können, sondern auch alle anderen Arten von Fräsern, insbesondere einschraubbarer Fräsköpfe, die zweckmäßigerweise mit einer Kordel ausgerüstet werden.

Abschließend ist festzuhalten, dass völlig unabhängig von den bisher aufgestellten Ansprüchen auch Schutz für folgende Ausführungsform beansprucht wird:
Fräser mit mindestens einer an seinem Umfang angeordneten Umfangschneide 4, wobei die Umfangsschneide 4 als Profil aus voneinander beabstandeten Zähnen 7 ausgestaltet ist, das eine sog. "Kordel" bildet; dadurch gekennzeichnet, dass jeder der Zähne 7 - wenn man von der Spannut her in Umfangsrichtung auf die Schneidkante blickt - eine Schneidkante SK ausbildet, die aus mindestens zwei unterschiedlichen Radien zusammengesetzt ist, nämlich aus mindestens einem größeren Radius R1, der den überwiegenden Teil der Schneidkante des betreffenden Zahns 7 bildet und mindestens einem sich unmittelbar daran anschließenden, kleineren Radius R2.

Der Vollständigkeit halber sei gesagt, dass zur Verwirklichung der Erfindung vorzugsweise eine konstanter großer Radius R1 und ein konstanter kleiner Radius R2 zum Einsatz kommen, die unmittelbar ineinander übergehen, wobei der sich auf der einen Seite an den großen Radius R1 anschließende kleine Radius R2 nicht mit zwingend dem sich auf der anderen Seite anschließenden kleineren Radius R2 betragsgleich ist.

Aus rein patentrechtlichen Gründen wird aber vorzugsweise auch Schutz für eine Schneidkante beansprucht, die unter anderem aus lokal unterschiedlichen großen Radien R 1_{(1, 2 bis x)} besteht, die den ansonsten von einem einzigen, konstant großen Radius R1 gebildeten Bogen ersetzen und/oder die unter anderem aus lokal unterschiedlich großen kleinen Radien R2_{(1, 2 bis y)} besteht, die den ansonsten von einem konstanten kleinen Radius R2 gebildeten Bogen ersetzen. Dementsprechend ist der im zu dieser Anmeldung gehörenden Hauptanspruch zu findende Begriff des kleineren Radius R1 und des größeren Radius R2 auszulegen.

### Bezugszeichenliste

- 1: Schaftfräser
- 2: Stirnschneide
- 3: Stirnschneidkante
- 4: Umfangsschneide
- 5: Umfangsschneidkante
- 6: Steilflanke
- 7: Zahn
- 8: Hauptfreifläche
- 9: Nut
- 10: Spannut

- α: Drallwinkel der Umfangsschneide auch Steigungswinkel genannt
- α1: erster von mehreren unterschiedlichen Drallwinkeln
- α2: zweiter von mehreren unterschiedlichen Drallwinkeln

- β: Winkel zwischen der seitlichen Steilflanke eines Zahns und der gedachten Zahnmittellinie

- A: Abstand der ersten Nut einer Umfangsschneide von der zugehörigen Stirnschneide
- MZ: gedachte Mittellinie eines Zahns
- L: Rotationsachse des Fräsers im bestimmungsgemäßen Betrieb
- ZB: Zahnbreite
- NB: Nutbreite
- NT: Nuttiefe
- RK: Krümmungsradius an einer spitzen Kante
- SK: Schneidkante
- U: Arbeitsdrehrichtung
- S: gedachte Schraubenlinie auf der in Umfangsrichtung gesehen Nuten von unmittelbar aufeinanderfolgenden Umfangsschneiden hinter einander angeordnet sind

## Patentansprüche

1. Fräser mit mindestens einer an seinem Umfang angeordneten Umfangschneide (4) wobei die Umfangsschneide (4) als Profil aus voneinander beabstandeten, durch Nuten (9) getrennten Zähnen (7) ausgestaltet ist, das eine sog. "Kordel" bildet, wobei jeder der Zähne (7) - wenn man von der Spannut her entgegen der Schnittrichtung auf die Schneidkante blickt - eine Schneidkante (SK) ausbildet, die aus mehreren unterschiedlichen Radien zusammengesetzt ist, nämlich aus mindestens einem größeren Radius (R1), der den überwiegenden Teil der Schneidkante des betreffenden Zahns (7) bildet und einem sich vorzugsweise zu beiden Seiten unmittelbar daran anschließenden, kleineren Radius (R2),
**dadurch gekennzeichnet, dass** die einer Stirnscheide (2) am nächsten liegende Nut (9) einer in diese Stirnschneide (2) mündenden Umfangsschneide (4) einen Abstand (A) zu der besagten Stirnschneide (2) aufweist, der mindestens eine Zahnbreite (ZB) beträgt, so dass der Fräser im Übergangsbereich zwischen Stirn- und Umfangsschneide keine unvollständigen Zähne besitzt, wobei jeweils zwei entlang einer Hauptschneidkante (5) benachbarte Zähne (7) nur durch schmale Nuten (9) voneinander getrennt sind, für deren Breiten ZB (Zahnbreite) und NB (Nutbreite) gilt NB/ZB ≤ 0,5, und wobei gilt, dass die Zahnbreite (ZB) zur Nuttiefe (NT) ZB/NT ≤ 3,5 ist.

2. Fräser nach Anspruch 1 **dadurch gekennzeichnet, dass** der besagte Abstand (A) nicht mehr als drei, vorzugsweise nicht mehr als zwei Zahnbreiten (ZB) beträgt.

3. Fräser nach Anspruch 1, **dadurch gekennzeichnet, dass** für Größe des größeren Radius (R1) und des kleineren Radius (R2) relativ zueinander gilt: R1/R2 ≥ 10 und vorzugsweise R1/R2 ≥ 15.

4. Fräser nach Anspruch 1, **dadurch gekennzeichnet, dass** sich an die kleineren Radien (R2) jeweils eine Steilflanke (6) anschließt, die unter einem Winkel (β) zur Mittellinie (MZ) des betreffenden Zahns (7) verläuft, der ≤ 30° und vorzugsweise sogar ≤ 18° ist.

5. Fräser nach Anspruch 4, **dadurch gekennzeichnet, dass** die Steilflanke in einen konkaven Grund einer Nut (9) übergeht.

6. Fräser nach einem der vorhergehenden Ansprüche, **dadurch gekennzeichnet, dass** jeweils zwei entlang einer Hauptschneidkante (5) benachbarte Zähne (7) nur durch schmale Nuten (9) voneinander getrennt sind, für deren Breiten ZB (Zahnbreite) und NB (Nutbreite) gilt NB/ZB ≤ 0,3.

7. Fräser nach einem der vorhergehenden Ansprüche, **dadurch gekennzeichnet, dass** jeweils zwei entlang einer Hauptschneidkante (5) benachbarte Zähne (7) durch Nuten (9) voneinander getrennt sind, wobei gilt, dass der Betrag der maximalen Nuttiefe (NT) im Wesentlichen kleiner oder gleich dem Betrag der maximalen Nutbreite (NB) ist.

8. Fräser nach einem der vorhergehenden Ansprüche, **dadurch gekennzeichnet, dass** der Fräser ein Vollhartmetallfräser ist.

## Claims

1. Milling cutter having at least one circumferential cutting lip (4) arranged on its circumference, wherein the circumferential cutting lip (4) is configured as a profile consisting of spaced-apart teeth (7) separated by grooves (9), which profile forms a so-called "knurl", wherein each of the teeth (7) - when viewing the cutting edge from the chip groove counter to the cutting direction - forms a cutting edge (SK) which is composed of a plurality of different radii, namely of at least one large radius (R1), which forms the most part of the cutting edge of the relevant tooth (7), and a smaller radius (R2) preferably directly adjoining the latter on both sides,
**characterized in that** the groove (9) situated closest to an end cutting lip (2) and belonging to a circumferential cutting lip (4) opening into this end cutting lip (2) has a distance (A) from said end cutting lip (2) that has at least one tooth width (ZB), such that the milling cutter has no incomplete teeth in the transition region between the end cutting lip and circumferential cutting lip, wherein in each case two teeth (7) which are adjacent along a main cutting edge (5) are separated from one another only by narrow grooves (9), for whose widths (ZB) (tooth width) and (NB) (groove width) it holds that NB/ZB ≤ 0.5, and wherein it holds that the tooth width (ZB) in relation to the groove depth (NT) is ZB/NT ≤ 3.5.

2. Milling cutter according to Claim 1, **characterized in that** said distance (A) is not more than 3, preferably not more than 2, tooth widths (ZB).

3. Milling cutter according to Claim 1, **characterized in that**, for the size of the larger radius (R1) and of the smaller radius (R2) relative to one another, it holds that: R1/R2 ≥ 10 and preferably R1/R2 ≥ 15.

4. Milling cutter according to Claim 1, **characterized in that** the smaller radii (R2) are each adjoined by a steep flank (6) which extends at an angle (β) to the centre line (MZ) of the relevant teeth (7) that is ≤ 30° and preferably even ≤ 18°.

5. Milling cutter according to Claim 4, **characterized in that** the steep flank transitions into a concave base of a groove (9).

6. Milling cutter according to one of the preceding claims, **characterized in that** in each case two teeth (7) which are adjacent along a main cutting edge (5) are separated from one another by only narrow grooves (9), for whose widths (ZB) (tooth width) and (NB) (groove width) it holds that NB/ZB ≤ 0.3.

7. Milling cutter according to one of the preceding claims, **characterized in that** in each case two teeth (7) which are adjacent along a main cutting edge (5) are separated from one another by grooves (9), wherein it holds that the magnitude of the maximum groove depth (NT) is substantially less than or equal to the magnitude of the maximum groove width (NB) .

8. Milling cutter according to one of the preceding claims, **characterized in that** the milling cutter is a solid carbide milling cutter.

## Revendications

1. Fraise comprenant au moins un tranchant périphérique (4) agencé sur sa périphérie, le tranchant périphérique (4) étant conçu sous forme de profil de dents (7) espacées les unes des autres, séparées par des rainures (9), qui forme ce que l'on appelle un « cordon », chacune des dents (7) formant, lorsqu'on regarde l'arête de coupe depuis la rainure à copeaux à l'encontre de la direction de coupe, une arête de coupe (SK) qui est composée de plusieurs rayons différents, à savoir d'au moins un plus grand rayon (R1) qui forme la partie prépondérante de l'arête de coupe de la dent concernée (7) et d'un plus petit rayon (R2) qui s'y raccorde de préférence directement des deux côtés,
**caractérisée en ce que** la rainure la plus proche (9) d'un tranchant frontal (2) d'un tranchant périphérique (4) débouchant dans ce tranchant frontal (2) présente une distance (A) par rapport audit tranchant frontal (2) qui est d'au moins une largeur de dent (ZB), de telle sorte que la fraise ne possède pas de dents incomplètes dans la zone de transition entre le tranchant frontal et le tranchant périphérique, deux dents (7) voisines le long d'une arête de coupe principale (5) n'étant respectivement séparées l'une de l'autre que par des rainures étroites (9), pour les largeurs ZB (largeur de dent) et NB (largeur de rainure) desquelles on a NB/ZB ≤ 0,5 et la largeur de dent (ZB) sur la profondeur de rainure (NT) ZB/NT ≤ 3,5.

2. Fraise selon la revendication 1, **caractérisée en ce que** ladite distance (A) n'est pas supérieure à trois, de préférence pas supérieure à deux largeurs de dent (ZB).

3. Fraise selon la revendication 1, **caractérisée en ce que**, pour la taille du plus grand rayon (R1) et du plus petit rayon (R2) l'un par rapport à l'autre, on a : R1/R2 ≥ 10 et de préférence R1/R2 ≥ 15.

4. Fraise selon la revendication 1, **caractérisée en ce qu'**un flanc abrupt (6) se raccorde respectivement aux plus petits rayons (R2), qui s'étend selon un angle (β) par rapport à la ligne médiane (MZ) de la dent (7) concernée, qui est ≤ 30° et de préférence même ≤ 18°.

5. Fraise selon la revendication 4, **caractérisée en ce que** le flanc abrupt se prolonge par un fond concave d'une rainure (9).

6. Fraise selon l'une quelconque des revendications précédentes, **caractérisée en ce que** deux dents (7) voisines le long d'une arête de coupe principale (5) ne sont respectivement séparées l'une de l'autre que par des rainures étroites (9), pour les largeurs ZB (largeur de dent) et NB (largeur de rainure) desquelles on a NB/ZB ≤ 0,3.

7. Fraise selon l'une quelconque des revendications précédentes, **caractérisée en ce que** deux dents (7) voisines le long d'une arête de coupe principale (5) sont respectivement séparées l'une de l'autre par des rainures (9), la valeur de la profondeur de rainure maximale (NT) étant essentiellement inférieure ou égale à la valeur de la largeur de rainure maximale (NB).

8. Fraise selon l'une quelconque des revendications précédentes, **caractérisée en ce que** la fraise est une fraise en métal dur plein.
